(19) Europäisches Patentamt / European Patent Office / Office européen des brevets

(11) EP 2 909 069 B1

(12) FASCICULE DE BREVET EUROPEEN

(45) Date de publication et mention
de la délivrance du brevet:
**29.11.2017  Bulletin 2017/48**

(21) Numéro de dépôt: **13785549.0**

(22) Date de dépôt: **11.10.2013**

(51) Int Cl.:
*B60W 30/14* *(2006.01)*    *B60W 10/11* *(2012.01)*
*B60W 50/06* *(2006.01)*    *B60W 50/08* *(2012.01)*
*F16H 61/16* *(2006.01)*

(86) Numéro de dépôt international:
**PCT/FR2013/052439**

(87) Numéro de publication internationale:
**WO 2014/060689 (24.04.2014 Gazette 2014/17)**

(54) **PROCEDE DE COMMANDE D'UNE BOÎTE DE VITESSE AUTOMATIQUE OU MANUELLE PILOTEE**

VERFAHREN ZUR STEUERUNG EINES ANGETRIEBENEN MANUELLEN ODER AUTOMATISCHEN GETRIEBES

METHOD FOR CONTROLLING A DRIVEN MANUAL OR AUTOMATIC GEARBOX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2012  FR 1259891**

(43) Date de publication de la demande:
**26.08.2015  Bulletin 2015/35**

(73) Titulaire: **PSA Automobiles SA**
**78300 Poissy (FR)**

(72) Inventeur: **HECKETSWEILER, Thierry**
**F-90800  Bavilliers (FR)**

(74) Mandataire: **Rosenberg, Muriel Sylvie**
**PSA Automobiles SA**
**VPIB - LG081**
**18 rue des Fauvelles**
**92250 La Garenne Colombes (FR)**

(56) Documents cités:
**EP-A1- 2 168 836    DE-A1- 10 142 274**
**FR-A1- 2 813 050    FR-A1- 2 842 579**
**FR-A1- 2 847 636    US-A1- 2012 123 651**

EP 2 909 069 B1

**Description**

La présente invention concerne un procédé de commande d'une boîte de vitesse automatique ou manuelle pilotée avec un régulateur de vitesse équipant un véhicule en situation de montée.

Un régulateur de vitesse d'un véhicule automobile est un système destiné à stabiliser automatiquement la vitesse des véhicules automobiles et/ou à fixer une vitesse maximale limite (on parle alors de limiteur de vitesse). Le conducteur fixe la vitesse à laquelle il veut rouler, puis l'automatisme assure le relais et maintient la vitesse ainsi définie. Un tel système est apprécié sur les longues distances et permet généralement un usage optimal de la consommation de carburant. Il permet aussi d'éviter des excès de vitesse par inadvertance. Dans l'état de la technique, des procédés de pilotage des organes de transmission permettant de suivre la consigne de vitesse fixée par le conducteur sont connus.

Dans certaines situations, comme en cas de forte montée ou en montée avec une charge importante, le véhicule ne peut pas maintenir la vitesse. Lorsque le véhicule a suffisamment perdu de vitesse, le passage à un rapport inférieur peut se produire tout en assurant un régime moteur au-dessous du régime maximum possible (rupteur). Avec ce nouveau rapport engagé, le véhicule va pouvoir à nouveau accélérer pour essayer de rattraper la consigne de vitesse définie par le conducteur. Mais rapidement, le régime moteur va se rapprocher du régime maximum et la protection du moteur va imposer une remontée de rapport. A nouveau, le véhicule va perdre de la vitesse, la boîte de vitesse rétrograde, puis le véhicule va accélérer à nouveau engageant ainsi un nouveau cycle. On appelle ce phénomène aussi un pompage de rapport lorsque le groupe motopropulseur GMP ne permet plus d'assurer le suivi de la consigne de vitesse définie par le conducteur.

Le document de brevet FR-2 847 636 A1 divulgue un procédé de contrôle du choix du rapport de démultiplication d'une transmission automatique comportant des moyens de pilotage pour inhiber/autoriser un allongement du rapport de démultiplication ou déclencher un raccourcissement du rapport de démultiplication.

Le document de brevet FR-2 813 050 A1 divulgue un système de régulation de la vitesse d'un véhicule automobile équipé d'un groupe motopropulseur comportant une boîte de vitesses, comprenant un calculateur recevant des informations concernant la vitesse de rotation du moteur, le rapport de transmission, la vitesse du véhicule et la valeur de la dénivellation.

C'est le but de la présente invention d'améliorer cette situation et de proposer un procédé de commande d'une boîte de vitesse automatique ou manuelle pilotée avec un régulateur de vitesse qui permette d'éviter un tel pompage de rapport et d'éviter un changement de rapport plus fréquent que nécessaire.

Pour résoudre ce problème évoqué, la présente invention a pour objet un procédé de commande d'une boîte de vitesse automatique ou manuelle pilotée avec un régulateur de vitesse équipant un véhicule en situation de montée, ledit procédé consiste à réguler la vitesse à une valeur de consigne fixée par le conducteur du véhicule, à acquérir les valeurs immédiates de la vitesse et du couple moteur, à estimer des efforts résistants à partir des valeurs de vitesse et du compte-tours moteur, à calculer à partir de l'estimation des efforts résistants et du couple maximum du moteur thermique l'accélération véhicule maximum possible sur le rapport supérieur de la boîte de vitesse à celui engagé, à activer une fonction de bridage de vitesse véhicule (BW) à une consigne de vitesse correspondant au régime maximum possible pour le moteur thermique lorsque l'accélération maximum possible sur le rapport supérieur est négative, à ne pas activer la fonction de bridage de vitesse véhicule (BW) lorsque l'accélération maximum possible sur le rapport supérieur est positive.

Selon un mode de réalisation préféré, l'accélération véhicule maximum possible sur le rapport supérieur $A_{vehmax}$ est calculée selon la formule

$$Aveh\max = \frac{C_{GMP\max}}{M.R} + \frac{F_{res}}{M}$$

M représentant la masse du véhicule, R représentant le rayon des roues, $C_{GMP}$ représentant le couple du groupe motopropulseur, et $F_{res}$ représentant la somme des forces résistantes, telles que la résistance roulement, la résistance aérodynamique et la résistance pente.

Selon un mode de réalisation préféré, la fonction de bridage de vitesse détermine le couple moteur afin de brider la vitesse véhicule à une consigne de bridage de vitesse.

Avantageusement, la consigne de bridage de vitesse correspond à la fonction immédiate de bridage de vitesse véhicule qui détermine le couple moteur maximum disponible afin de respecter la vitesse maximale à réguler au moyen du régulateur de vitesse.

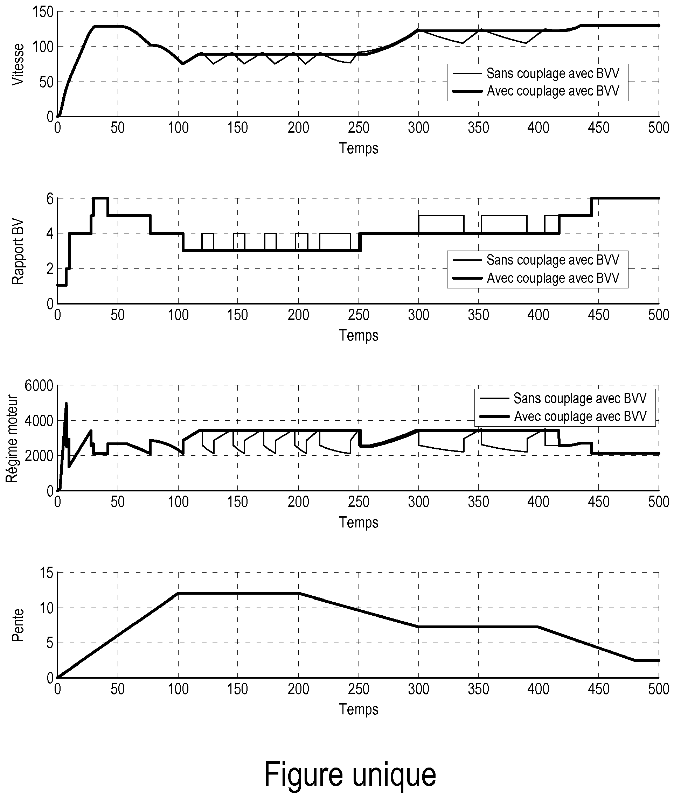

D'autres caractéristiques et avantages de la présente invention vont apparaître à la lecture de la description d'un mode de réalisation préféré et de la Figure annexée qui montre les paramètres pente, régime moteur, rapport boîte de vitesse et vitesse dans le temps durant une situation de montée de forte pente.

Le diagramme situé en bas de la Figure unique montre la pente d'une route parcourue par un véhicule en 500 secondes. Le choix d'un tel intervalle est aléatoire et peut bien entendu être différent. Dans les premières 100 secondes, la pente monte continuellement. Puis la pente reste constante durant 100 secondes, pour ensuite diminuer doucement jusqu'à la fin de l'intervalle.

Un conducteur d'un véhicule débute le parcours en activant en même temps son régulateur de vitesse. Il fixe une vitesse de consigne, disons à 130 km à l'heure.

Le conducteur du véhicule appuie sur l'accélérateur ce qui amène la boîte de vitesse automatique à changer les rapports pour garder le régime moteur dans des limites prédéterminées.

Après environ 50 secondes, la vitesse de consigne, fixée par le conducteur, est atteinte, mais ensuite, la pente s'accroît toujours et le GMP (groupe motopropulseur) n'est plus capable de maintenir la vitesse de consigne. La vitesse diminue et la boîte de vitesse automatique rétrograde le rapport engagé en descendant dans l'exemple illustré de trois rapports. Pendant une période où la pente reste constante, un véhicule qui n'applique pas le procédé de commande de sa boîte de vitesse automatique selon l'invention est soumis à l'effet de pompage de rapport décrit ci-dessus, c'est-à-dire que la boîte de vitesse automatique rétrograde un rapport, la voiture accélère pour rattraper la consigne de vitesse, se rapproche du régime maximum et la protection du moteur impose une remontée de rapport. Ceci se passe assez fréquemment et se traduit par un pompage de vitesse désagréable, comme le montre le diagramme en haut de la Figure.

Le procédé de commande selon l'invention applique une fonction de bridage de vitesse du véhicule qui bride la vitesse véhicule à une vitesse au-dessous de la vitesse qui correspond au régime maximum possible pour le moteur thermique du rapport engagé.

Pour appliquer une telle fonction de bridage, le procédé de commande selon l'invention acquiert dans une première étape les valeurs de la vitesse et du couple moteur immédiates. Ensuite, le procédé estime les efforts résistants à partir des valeurs de vitesse et des couples moteurs. A partir de l'estimation des efforts résistants et du couple maximum du moteur thermique, un calculateur embarqué du véhicule calcule l'accélération véhicule maximum possible sur le rapport de boîte supérieur à celui engagé.

Lorsque l'accélération maximum possible sur le rapport supérieur est négative, la fonction de limitation c'est-à-dire de bridage de vitesse véhicule BW est activée à une consigne de vitesse correspondant au régime maximum possible pour le moteur thermique.

Lorsque l'accélération sur le rapport supérieur permet à nouveau d'avoir une accélération positive, la fonction de bridage de vitesse véhicule sera désactivée.

Les efforts résistants sont la somme des efforts aérodynamiques, des efforts de la pente, et des efforts de roulement ainsi que l'effort résistant du groupe motopropulseur lui-même.

A partir de l'estimation des efforts résistants et du couple maximum du moteur thermique, on détermine l'accélération véhicule maximum possible sur le rapport supérieur de la boîte.

Principe fondamental de la dynamique :

$M.Aveh = \sum forces$ avec M la masse du véhicule, Aveh l'accélération véhicule et forces les forces appliqués au système véhicule.

$$M.Aveh = F_{GMP} + F_{roulement} + F_{aérodynamique} + F_{pente}$$

Or

$$F_{res} = F_{roulement} + F_{aérodynamique} + F_{pente}$$

$$M.Aveh = F_{GMP} + F_{res}$$

$$M.Aveh = \frac{C_{GMP}}{R} + F_{res}$$ avec $C_{GMP}$ le couple du GMP et R le rayon des roues

$$\boxed{Aveh = \frac{C_{GMP}}{M.R} + \frac{F_{res}}{M}}$$

et

$$Aveh\,\max = \frac{C_{GMP\,\max}}{M.R} + \frac{F_{res}}{M}$$

La fonction de bridage de vitesse véhicule BW détermine le couple moteur afin de brider la vitesse véhicule à la consigne de bridage de vitesse. Elle correspond à la fonction actuelle de bridage de vitesse véhicule qui détermine le couple moteur maximum disponible au conducteur afin d'assurer le respect de la vitesse maximale (consigne de bridage de vitesse).

Le résultat de ce processus de contrôle selon l'invention peut être observé sur les diagrammes de la Figure unique. La consigne de bridage de vitesse a pour conséquence que dans la période comprise entre 100 et 250 secondes environ dans le cas où le procédé de commande selon l'invention n'est pas appliqué, le pompage de rapport se manifeste, le rapport choisi au début de cette période par la boîte de vitesse automatique, dans ce cas la troisième vitesse reste constamment engagé au lieu d'osciller en permanence entre la quatrième et la troisième vitesse.

Egalement le nombre des tours moteur reste essentiellement constant au lieu de présenter un profil en dents-de-scie.

Après 200 secondes, la pente décline doucement jusqu'à la fin de la période observée et lorsqu'il est calculé, selon le procédé de commande, que l'accélération sur le rapport supérieur sera positive, la fonction bridage de vitesse véhicule n'est pas activée et le régulateur de vitesse pilote la boîte de vitesse automatique de manière à atteindre la vitesse consigne.

La mise au point des prescriptions de passage de boîte de vitesse pour les fonctions de régulation et des limitations de vitesse sont alors considérablement simplifiées car elles s'adaptent automatiquement grâce à l'estimation des efforts résistants et la solution permet de régler totalement le problème de pompage sur forte pente.

**Revendications**

1. Procédé de commande d'une boîte de vitesse automatique ou manuelle pilotée avec un régulateur de vitesse équipant un véhicule en situation de montée, **caractérisé en ce qu'**il consiste à :

- réguler la vitesse à une valeur de consigne fixée par le conducteur du véhicule,
- acquérir les valeurs immédiates de la vitesse et du couple moteur,
- estimer des efforts résistants à partir des valeurs de vitesse et du compte-tour moteur,
- calculer à partir de l'estimation des efforts résistants et du couple maximum du moteur thermique l'accélération véhicule maximum possible sur le rapport supérieur de la boîte de vitesse à celui engagé,
- activer une fonction de bridage de vitesse véhicule (BW) à une consigne de vitesse correspondant au régime maximum possible pour le moteur thermique lorsque l'accélération maximum possible sur le rapport supérieur est négative,
- ne pas activer la fonction de bridage de vitesse véhicule (BW) lorsque l'accélération maximum possible sur le rapport supérieur est positive.

2. Procédé de commande selon la revendication 1, **caractérisé en ce que** l'accélération véhicule maximum possible sur le rapport supérieur A$_{vehmax}$ est calculée selon la formule :

$$Aveh\,\max = \frac{C_{GMP\,\max}}{M.R} + \frac{F_{res}}{M}$$

avec

M représentant la masse du véhicule,
R représentant le rayon des roues,
C$_{GMP}$ représentant le couple du groupe motopropulseur, et
F$_{res}$ représentant la somme des forces résistantes, telle que la résistance roulement, la résistance aérodynamique et la résistance pente.

3. Procédé de commande selon la revendication 1 ou 2, **caractérisé en ce que** la fonction de bridage de vitesse détermine le couple moteur afin de brider la vitesse véhicule à une consigne de bridage de vitesse.

**4.** Procédé de commande selon la revendication 3, **caractérisé en ce que** la consigne de bridage de vitesse correspond à la fonction immédiate de bridage de vitesse véhicule qui détermine le couple moteur maximum disponible afin de respecter la vitesse maximale à réguler au moyen d'un régulateur de vitesse.

**Patentansprüche**

**1.** Verfahren zur Steuerung eines angetriebenen manuellen oder automatischen Getriebes mit einem Geschwindigkeitsregler, die ein Fahrzeug ausstattet, in Steigungssituation, **dadurch gekennzeichnet, dass** es aus Folgendem besteht:

- Regulieren der Geschwindigkeit auf einen Sollwert, der von dem Fahrer des Fahrzeugs festgelegt wird,
- Erfassen der Momentanwerte der Geschwindigkeit und des Motordrehmoments,
- Schätzen der Widerstandskräfte ausgehend von den Drehzahlwerten und dem Drehzahlmesser des Motors,
- ausgehend von der Schätzung der Widerstandskräfte und des maximalen Drehmoments der Brennkraftmaschine, Berechnen der maximal möglichen Fahrzeugbeschleunigung auf dem höheren Gang des Getriebes als dem eingerückten Gang,
- Aktivieren einer Fahrzeuggeschwindigkeits-Drosselungsfunktion (Bridage de Vitesse Vehicule - BVV) auf einen Geschwindigkeitssollwert, der der maximal möglichen Drehzahl für die Brennkraftmaschine entspricht, wenn die maximal mögliche Beschleunigung auf dem höheren Gang negativ ist,
- Nichtaktivieren der Fahrzeuggeschwindigkeits-Drosselungsfunktion (BVV), wenn die maximal mögliche Beschleunigung auf dem höheren Gang positiv ist.

**2.** Verfahren zur Steuerung nach Anspruch 1, **dadurch gekennzeichnet, dass** die auf dem höheren Gang mögliche maximale Fahrzeugbeschleunigung $A_{Fzgmax}$ gemäß der folgenden Formel berechnet wird:

$$A_{Fzg\,max} = \frac{C_{GMP\,max}}{M.R} + \frac{F_{res}}{M} \, ,$$

wobei

M die Masse des Fahrzeugs darstellt,
R den Radius der Räder darstellt,
$C_{GMP}$ das Drehmoment des Antriebsaggregats darstellt, und
$F_{res}$ die Summe der Widerstandskräfte darstellt, wie zum Beispiel den Fahrwiderstand, den Luftwiderstand und den Steigungswiderstand.

**3.** Verfahren zur Steuerung nach Anspruch 1 oder 2, **dadurch gekennzeichnet, dass** die Geschwindigkeits-Drosselungsfunktion das Motordrehmoment bestimmt, um die Fahrzeuggeschwindigkeit auf einen Geschwindigkeitsdrosselungssollwert zu drosseln.

**4.** Verfahren zur Steuerung nach Anspruch 3, **dadurch gekennzeichnet, dass** der Geschwindigkeitsdrosselungssollwert der Momentan-Fahrzeug-Geschwindigkeitdrosselungsfunktion entspricht, die das maximal verfügbare Motordrehmoment bestimmt, um die maximale Geschwindigkeit, die mittels eines Geschwindigkeitsreglers reguliert wird, einzuhalten.

**Claims**

**1.** A method for controlling a driven automatic or manual gearbox with a speed regulator equipping a vehicle travelling uphill, **characterized in that** it consists in:

- regulating the speed to a set-point fixed by the driver of the vehicle,
- acquiring the immediate values of the speed and of the engine torque,
- estimating resistant forces from speed values and from the engine rev counter,
- calculating from the estimation of the resistant forces and the maximum torque of the heat engine the maximum possible vehicle acceleration in the gear box ratio above the one which is engaged,

- activating a vehicle speed limiting function (BVV) at a speed set-point corresponding to the maximum possible speed for the heat engine when the maximum possible acceleration on the higher ratio is negative,
- not activating the vehicle speed limiting function (BVV) when the maximum possible acceleration on the higher ratio is positive.

2. The method for controlling according to claim 1, **characterized in that** the maximum possible vehicle acceleration on the higher ratio $A_{vehmax}$ is calculated according to the formula:

$$A_{Fzg\,max} = \frac{C_{GMP\,max}}{M.R} + \frac{F_{res}}{M},$$

with

M representing the mass of the vehicle,
R representing the radius of the wheels,
$C_{GMP}$ representing the torque of the powertrain, and
$F_{res}$ representing the sum of the resistant forces, such as the rolling resistance, aerodynamic resistance and slope resistance.

3. The method for controlling according to claim 1 or 2, **characterized in that** the speed limiting function determines the engine torque so as to limit the vehicle speed at a speed limiting set-point.

4. The method for controlling according to claim 3, **characterized in that** the speed limiting set-point corresponds to the immediate vehicle speed limiting function which determines the maximum available engine torque so as to adhere to the maximum speed to be regulated by means of a speed regulator.

Figure unique

**EP 2 909 069 B1**

**RÉFÉRENCES CITÉES DANS LA DESCRIPTION**

**Documents brevets cités dans la description**

- FR 2847636 A1
- FR 2813050 A1